(19) Europäisches Patentamt
European Patent Office
Office européen des brevets

(11) EP 0 549 451 B1

(12) **FASCICULE DE BREVET EUROPEEN**

(45) Date de publication et mention de la délivrance du brevet:
**15.01.1997 Bulletin 1997/03**

(51) Int Cl.[6]: **H04J 4/00**, H04J 1/05

(21) Numéro de dépôt: **92403505.8**

(22) Date de dépôt: **21.12.1992**

(54) **Dispositif de démultiplexage en fréquence à filtres numériques**

Frequenzmultiplexvorrichtung mit digitalen Filtern

Frequency multiplex apparatus employing digital filters

(84) Etats contractants désignés:
**GB IT**

(30) Priorité: **20.12.1991 FR 9115931**

(43) Date de publication de la demande:
**30.06.1993 Bulletin 1993/26**

(73) Titulaire: **FRANCE TELECOM**
**75015 Paris (FR)**

(72) Inventeurs:
- **Guo, Xiao Yong**
  **F-31400 Toulouse (FR)**
- **Maral, Gérard**
  **F-31120 Goyrans (FR)**

(74) Mandataire: **Cabinet Martinet & Lapoux**
**BP 405**
**78055 Saint Quentin en Yvelines Cédex (FR)**

(56) Documents cités:
- **ALTA FREQUENZA. vol. 17, no. 10, MILANO IT, DEC. 1988 pages 545 - 559 E. DEL RE ET AL 'DIGITAL MULTICARRIER DEMODULATOR FOR REGENERATIVE COMMUNICATION SATELLITES'**
- **INTERNATIONAL JOURNAL OF SATELLITE COMMUNICATIONS, 1988 vol. 6, pages 243 - 251 W.H.WIM ET AL 'MULTI-CARRIER DEMODULATORS FOR ON-BOARD PROCESSING SATELLITES'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 549 451 B1

## Description

La présente invention concerne de manière générale le multiplexage/démultiplexage en fréquence par traitement numérique.

Les premiers dispositifs de multiplexage/démultiplexage en fréquence par traitement numérique sont apparus au sein de transmultiplexeurs pour résoudre le problème des transferts de données entre voies multiplex de natures différentes à l'intérieur du réseau téléphonique. Par exemple, un tel transmultiplexeur établit une connexion entre un multiplex de groupe secondaire (GS) constitué de 60 voies téléphoniques analogiques d'une largeur de bande de 4 kHz multiplexées en fréquence et deux voies multiplex MIC primaires (TN1) à 2048 Mbit/s. Ainsi, de manière très schématique, les transmultiplexeurs assurent une conversion entre voie multiplex à répartition fréquentielle (MRF) et voie multiplex à répartition temporelle (MRT).

Dans le domaine des télécommunications par satellite, cette technique de transmultiplexage s'est avérée particulièrement intéressante pour satisfaire deux conditions pour une mise en oeuvre optimale des réseaux par satellite. D'une part, l'accès multiple à répartition en fréquence (AMRF) pour des liaisons montantes établies de stations terriennes vers le satellite s'est avérée être une technique prometteuse en ce qu'elle réduit la puissance d'émission nécessaire et les dimensions des antennes éméttrices pour les stations terriennes, et offre ainsi une plus grande flexibilité des lieux d'installation des stations. D'autre part, concernant les liaisons descendantes établies du satellite vers les stations terriennes, la technique AMRT est préconisée pour ne pas engendrer un bruit d'intermodulation lorsque plusieurs porteuses modulées par des signaux à transmettre sont transmises par le satellite. Ce bruit d'intermodulation augmente en fonction du nombre de porteuses. Une porteuse unique modulée par une trame numérique AMRT inhibe ce problème d'intermodulation.

Les satellites utilisés pour effectuer une telle conversion entre techniques AMRF et AMRT sont communément dénommés satellites regénérateurs puisqu'ils "regénérent" les signaux composants reçus sous la forme d'une voie multiplex en fonction des bandes de fréquence individuelles des signaux composants.

Comparativement à un réseau de microstations par satellite (VSAT en terminologie anglosaxonne pour "Very Small Aperture Terminal") dans lequel les liaisons respectives entre les microstations et une station centrale et la station centrale et les microstations sont assurées par une porteuse AMRT et une porteuse MRT, la technique de transmultiplexage à bord de satellites regénérateurs réduit par deux le temps de transmission entre deux stations puisque les transferts de données entre stations s'effectuent directement et non via une station centrale.

Malgré tous les avantages précités résultant de l'utilisation de satellites régénérateurs, les exploitants de satellites hésitent quelque peu à les utiliser.

Ceci résulte de deux exigences qui doivent être satisfaites pour une utilisation optimale de la largeur de bande totale assignée au réseau et qui sont antagonistes selon la technique antérieure :

- le transmultiplexeur doit être programmable de manière "simple" depuis le sol via une ligne spécialisée, pour être configuré en fonction de l'évolution du trafic dans le réseau satellite, et
- le transmultiplexeur doit recevoir des signaux multiplexés en fréquence ayant des largeurs de bande différentes.

L'organe central du transmultiplexeur est un dispositif de démultiplexage en fréquence qui est l'objet de la programmation depuis le sol. Selon la technique antérieure, différentes structures de démultiplexeurs, à base de filtres numériques, ont été proposées. On distingue principalement :

- les réalisations par traitements individuels des canaux qui présentent l'inconvénient de nécéssiter des réalisations matérielles très complexes et coûteuses lorsque le nombre des porteuses multiplexées en fréquence augmente et qui, de plus, nécessitent une programmation lourde;
- les réalisations à "transformateurs de Fourier rapides"qui présentent l'inconvénient de n'être véritablement efficaces que lorsque le nombre de porteuses est élevé, puisque dans le cas contraire, elles nécéssitent des temps de traitement longs comparativement aux nombres de porteuses;
- les réalisations à réseaux polyphasés constitués de lignes à retard et filtres numériques qui ne permettent pas de traiter, selon la technique antérieure, des signaux multiplexés en fréquence ayant des largeurs de bandes qui sont différentes.

La présente invention vise à fournir un dispositif de démultiplexage mettant en oeuvre des réseaux polyphasés qui sont susceptibles d'être utilisés pour restituer des canaux initialement multipléxés en fréquence dont les largeurs de bande de fréquence sont différentes, et par suite de préférence adaptable à l'évolution du trafic traduite en des

modifications des canaux aussi bien en nombre qu'en largeur de bande.

A cette fin, un dispositif selon l'invention démultiplexe des canaux multiplexés en fréquence dans un signal échantillonné à multiporteuse définissant une bande de fréquence utile ayant une largeur prédéterminée. Les canaux sont définis par des porteuses modulées comprises dans la bande de fréquence utile et par des largeurs de bande de fréquence juxtaposées dans la bande de fréquence utile, les largeurs de bande de fréquence desdits canaux sont des sous-multiples entiers d'une largeur de bande maximale de canal qui elle-même est sous-multiple de la largeur de la bande de fréquence utile, et sont multiples entiers d'une largeur de bande minimale de canal.

Le dispositif de démultiplexage comprend, d'une manière analogue aux dispositifs connus à réseaux polyphasés, des ensembles parallèles incluant chacun une ligne à retard et un filtre numérique en série en un nombre prédéterminé égal au rapport entre la largeur de la bande de fréquence utile et la largeur de bande minimale de canal, et des moyens de traitement numérique à transformée de Fourier, dont des entrées respectives sont reliées à des sorties des filtres numériques desdits ensembles parallèles, pour restituer individuellement lesdits canaux, chacun desdits filtres étant déduit d'un filtre passe-bas numérique filtrant dans ladite largeur de bande minimale de canal.

Toutefois, les dispositifs connus à réseaux polyphasés ne traitent que des canaux ayant des largeurs de bande identiques. En d'autres termes, les largeurs de bande minimale et maximale sont égales à la largeur de bande de tous les canaux, et chaque ensemble à ligne à retard et filtre numérique est assigné au traitement d'un canal.

Selon l'invention, le dispositif de démultiplexage comprend :

- plusieurs moyens numériques de filtrage et décimation pour séparer les canaux dans le signal échantillonné à multiporteuse en des groupes de canal en un nombre prédéterminé, chaque groupe de canal comprenant des bandes de fréquence juxtaposées de tous les canaux qui ont une même largeur de bande qui est différente des largeurs de bande des autres canaux,
- plusieurs lignes à retard parallèles en un nombre prédéterminé égal au rapport entre la largeur de bande de fréquence utile et la largeur de bande maximale de canal, chaque groupe de canal étant retardé par un nombre de lignes à retard parallèles respectives égal au plus proche entier supérieur du rapport entre une largeur de bande de fréquence du groupe et la largeur de bande maximale de canal, et
- plusieurs réseaux polyphasés identiques parallèles respectivement reliés aux sorties des lignes à retard parallèles comprenant chacun plusieurs desdits ensembles parallèles à ligne à retard et filtre numérique en un nombre prédéterminé égal au rapport entre les largeurs de bande maximale et minimale de canal.

Grâce à l'arrangement des ensembles à ligne à retard et filtre numérique en les réseaux polyphasés indépendants et identiques, ceux-ci sont susceptibles de traiter des canaux dont les largeurs de bande sont différentes et comprises entre les largeurs de bande minimale et maximale. L'orientation des canaux vers ces réseaux polyphasés est réalisée en fonction des caractéristiques des canaux à l'intérieur des groupes, nombre et largeur de bande des canaux dans chaque groupe, auxquelles sont adaptées notamment les caractéristiques de filtrage, de décimation et de retard des moyens de filtrage et décimation et des lignes à retard précédant les réseaux polyphasés, comme également les caractéristiques matricielles dans les moyens de traitement à transformée de Fourier.

Ces adaptations dans le dispositif de démultiplexage selon l'invention peuvent se traduire par les caractéristiques suivantes :

- chacun des moyens de filtrage et décimation séparant un des groupes de canal dans le signal à multiporteuse comprend un filtre numérique ayant la largeur de bande du groupe, suivi d'un décimateur ayant un rapport de réduction égal au rapport entre la largeur de bande du groupe et la largeur de la bande de fréquence utile;
- les lignes à retard parallèles retardant un groupe de canal imposent des retards respectivement en proportion des multiples entiers à partir de zéro du rapport entre la largeur de bande de fréquence utile et la largeur de bande dudit groupe;
- les lignes à retard incluses dans chaque réseau polyphasé imposent des retards respectivement en proportion de multiples entiers à partir de zéro dudit rapport entre les largeurs de bande maximale et minimale de canal;
- les moyens de traitement numérique comprennent, pour chaque groupe de canal, plusieurs moyens matriciels carrés de coefficients de transformée de Fourier en nombre égal au rapport entre la largeur de bande des canaux dudit groupe et la largeur de bande minimale de canal, une dimension de chacun des moyens matriciels associés audit groupe étant égale au nombre de canaux dans ledit groupe.

Les diverses caractéristiques précédentes permettent d'adapter le dispositif de démultiplexage à l'évolution du trafic. En d'autres termes, le dispositif de démultiplexage est de préférence programmable. Dans ce cas, les moyens numériques de filtrage et décimation, les lignes à retard parallèles et les moyens de traitement numérique sont programmables par des moyens de commande recevant des caractéristiques relatives au nombre prédéterminé et à la répartition des groupes de canal dans la bande de fréquence utile et des nombres de canaux dans les groupes, et le

dispositif de multiplexage comprend plusieurs moyens de commutation respectivement reliés aux sorties des moyens numériques de filtrage et décimation et commandés par les moyens de commande pour relier sélectivement des sorties respectives de ces moyens numériques à des entrées des lignes en retard parallèles en fonction de ladite répartition des groupes et desdits nombres de canaux dans les groupes.

D'autres avantages et caractéristiques de la présente invention apparaîtront plus clairement à la lecture de la description suivante, en référence aux dessins annexés correspondants dans lesquels :

- la figure 1 montre schématiquement un réseau connu par satellite régénérateur;
- la figure 2 montre un bloc-diagramme d'un transmultiplexeur connu inclus dans le satellite regénérateur;
- la figure 3 est une représentation dans le domaine fréquentiel de signaux d'accès de base et d'accès primaire RNIS multiplexés en fréquence;
- les figures 4 et 5 montrent des bloc-diagrammes de deux dispositifs de démultiplexage en fréquence numériques selon la technique antérieure respectivement;
- la figure 6 est un bloc-diagramme schématique d'un dispositif de démultiplexage en fréquence programmable selon l'invention;
- les figures 7A et 7B montrent respectivement une première configuration du dispositif de démultiplexage programmable et une représentation fréquentielle d'un trafic de liaisons montantes correspondantes; et
- les figures 8A et 8B montrent respectivement une seconde configuration du dispositif de démultiplexage programmable et une représentation fréquentielle d'un trafic de liaisons montantes correspondantes.

En référence à la figure 1, un réseau par satellite régénérateur comprend typiquement un satellite 1, N stations terriennes $S_O$ à $S_{N-1}$ et une station de configuration SC pour la programmation du satellite 1 depuis le sol.

La station de configuration SC assure des fonctions de programmation du satellite 1 lors d'évolutions ou modifications de trafic entre stations terriennes $S_O$ à $S_{N-1}$. Typiquement, la liaison établie entre la station de configuration SC et le satellite est une liaison spécialisée LS transmettant l'intégrité des données de programmation élaborées par la station de configuration SC.

Les stations terriennes $S_i$, où i est un entier variant de 0 à N-1, transmettent à travers des liaisons montantes vers le satellite 1, des porteuses respectives modulées multiplexées en fréquence dans un plan de fréquence ayant une largeur de bande totale donnée de l'ordre du gigahertz. Les largeurs de bande assignées aux différentes porteuses sont de quelques mégahertz (telles que 6 MHz). Ce multiplexage en fréquence est représenté schématiquement sur la figure 1. Le satellite 1 recevant ces porteuses modulées multiplexées met en oeuvre des fonctions de transmultiplexage pour effectuer une conversion entre le format AMRF (Accès multiple à répartition en fréquence) caractérisant les liaisons montantes et un format MRT (multiplexage à répartition dans le temps) des liaisons descendantes entre le satellite 1 et les stations $S_O$ à $S_{N-1}$. Des données numériques transmises respectivement par les porteuses modulées multiplexées en fréquence sur des liaisons montantes sont ainsi multiplexées dans le temps sur des liaisons descendantes. Les stations $S_i$, en réception, sont affectées respectivement à des canaux temporels des liaisons descendantes pour recouvrer les données transmises par des porteuses des liaisons montantes.

La figure 2 montre un bloc-diagramme d'une réalisation connue d'un transmultiplexeur à bord du satellite 1. Le transmultiplexeur comprend, en cascade, un dispositif de démultiplexage en fréquence 10, N démodulateurs $11_O$ à $11_{N-1}$, une matrice de commutation 12, un multiplexeur temporel 13 et un modulateur 14. Les N porteuses modulées émises par les stations $S_O$ à $S_{N-1}$ et multiplexées en fréquence sont reçues par l'antenne du satellite 1 via les liaisons montantes, et sont appliquées à une borne d'entrée du dispositif de démultiplexage 10. Ce dernier démultiplexe les N porteuses qui sont transposées dans le domaine fréquentiel en bande de base pour être reproduites sur N sorties respectives du dispositif de démultiplexage. Ces N porteuses modulées en bande de base sont appliquées respectivement aux entrées des N démodulateurs $11_O$ à $11_{N-1}$ pour être démodulées afin de récupérer les données numériques modulant les porteuses. La matrice de commutation 12 assigne les données ainsi récupérées à des canaux temporels. Ces différents canaux sont multiplexés par le multiplexeur temporel 13 pour être retransmis, après modulation d'une porteuse unique $P_{AMRT}$ dans le modulateur 14, sur des liaisons descendantes vers les N stations.

Comme montré sur la figure 3, un tel réseau par satellite régénérateur peut concerner un Réseau Numérique à Intégration de Services offrant par exemple des accès de base à 144 kbit/s (2B + D) et des accès primaires à 1544 kbit/s (23B + D) et/ou 2048 kbit/s (30B + D). Les porteuses modulées par les différents signaux numériques aux débits de 144 kbit/s, 1544 kbit/s et/ou 2048 kbit/s sont multiplexées en fréquence dans la bande de fréquence offerte aux liaisons montantes, et sont caractérisées par des largeurs de bande qui sont différentes en dépendance des débits.

Deux dispositifs de démultiplexage numériques connus 10A et 10B selon la technique antérieure sont maintenant présentés en référence aux figures 4 et 5.

Le premier dispositif de démultiplexage 10A illustré à la figure 4 concerne un démultiplexeur en fréquence comprenant un réseau polyphasé et un transformateur de Fourier, et se réfère à l'article de Enrico del Re et Romano Fantacci paru dans "INTERNATIONAL JOURNAL OF SATELLITE COMMUNICATIONS, vol.6, pp 267-281 mars 1988.

Le réseau polyphasé est constitué de N branches parallèles. Chaque branche de rang n, n étant un entier compris entre 0 et N - 1, inclut en série une ligne à retard présentant une impédance s'écrivant sous forme de transformée en z, $z^{-n}$, et un filtre d'impédance noté $E_n(z)$. Les porteuses modulées multiplexées sont appliquées, après échantillonnage, à chacune des branches dont des sorties respectives sont appliquées à des entrées du transformateur de Fourier à N entrées et N sorties.

Le fonctionnement schématique du premier dispositif de démultiplexage 10A consiste en une translation dans le domaine fréquentiel d'un filtre passe-bas élémentaire ayant un gabarit à largeur de bande égale aux largeurs de bande identiques des porteuses modulées. Ainsi l'inconvénient fonctionnel d'une telle technique réside dans le fait que les porteuses modulées multiplexées en fréquence doivent avoir une même largeur de bande. Le fonctionnement du premier dispositif de démultiplexage à réseau polyphasé est le suivant :

Soit

$$H_O(z) = \sum_{m=O}^{M-1} h(m) z^{-m},$$

la fonction de transfert, sous forme de transformée en z, d'un filtre passe-bas élémentaire à réponse impulsionnelle finie. $H_O$ (z) s'écrit :

$$H_O(z) = [h(O)z^{-O} + h(1)z^{-1} + h(2)z^{-2} + h(3)z^{-3} +...+ h(M)\, z^{-M+1}],$$

soit, en décomposant en N séquences, :

$$H_O(z) = \sum_{k=O}^{K} h(kN) z^{-kN} + \sum_{k=O}^{K} h(kN + 1) z^{-kN-1} +..+ \sum_{k=O}^{K} h(kN + N - 1) z^{-kN-N+1},$$

ce qui s'écrit :

$$H_O(z) = z^{-O}\Big(\sum_{k=O}^{K} h(kN) z^{-kN}\Big) + z^{-1}\Big(\sum_{k=O}^{K} h(kN + 1) z^{-kN}\Big) + ..+ z^{-N+1}\Big(\sum_{k=O}^{K} h(kN + N - 1) z^{-kN}\Big),$$

soit :

$$H_O(z)= z^{-O}[E_O(z^{-kN})] + z^{-1}\, [E_1(z^{-kN})] + ...+ z^{-N+1}[E_{N-1}\, (z^{-kN})],$$

en posant

$$E_n(z^{-kN}) = \sum_{k=O}^{K} h(kN + n) z^{-kN}.$$

Cette écriture correspond à une représentation polyphasée à N composantes.

Soient N filtres $H_n(z)$, n variant de O à (N-1), qui filtrent respectivement les N porteuses modulées multiplexées

en fréquence ayant des largeurs de bande identiques couvrant une bande de fréquence totale égale à $\Delta f_T/2$. A partir de $H_O(z)$, la fonction de transfert du filtre passe-bas élémentaire, il peut être déduit par une translation en fréquence de $(n\ \Delta f_T/2N)$, un $n^{ième}$ filtre passe-bande qui a un gabarit coïncidant respectivement avec la bande fréquentielle attribuée à la $n^{ième}$ porteuse modulée, et qui correspond à un changement de la variable z par z exp[j2πn/N], où exp désigne l'opérateur exponentielle complexe. La fonction de transfert du $n^{ième}$ filtre $H_n(z)$ "décalé" en fréquence s'écrit donc :

$$H_n(z) = H_O[z \exp(j2\pi n/N)]$$

En introduisant la décomposition à N composantes polyphasées dans la relation précédente, il est obtenu :

$$H_n(z) = \sum_{k=O}^{N-1} z^{-k} \exp[-j2\pi kn/N] E_k(z^{-kN})$$

Ainsi pour les N filtres, la relation s'écrit :

$$\begin{pmatrix} H_0 & (z) \\ H_1 & (z) \\ . & . \\ H_{N-1} & (z) \end{pmatrix} = \begin{pmatrix} 1 & 1 & \dots & 1 \\ 1 & V & \dots & V^{(N-1)} \\ . & . & . & . \\ 1 & V^{(N-1)} & \dots & V^{(N-1)(N-1)} \end{pmatrix} . \begin{pmatrix} E_0(z^{-kN}) \\ z^{-1} E_1(z^{-kN}) \\ . \\ z^{-(N-1)} E_{N-1}(z^{-kN}) \end{pmatrix}$$

où V est égal à exp[-j2π/N].

La matrice opératrice centrale est représentative d'une transformée de Fourier tandis que les filtres $E_O(z^{-nN})$, $z^{-1}E_I(z^{-kN})$,...$z^{-(N-1)}\ E_{N-1}(z^{-kN})$ caractérisent des mises en cascade de lignes à retard de fonctions de transfert $z^{-O}$, $z^{-1}$,... $z^{-N+1}$ respectivement avec des filtres de fonctions de transfert $E_O(z^{-nN})$, $E_1(z^{-nN})$,... $E_{N-1}(z^{-nN})$. Ces considérations conditionnent la réalisation du dispositif de démultiplexage 10A présenté à la figure 4.

La seconde réalisation d'un dispositif de démultiplexage 10B selon la technique antérieure est maintenant présentée en référence à la figure 5, et se réfère à l'article de W.H YIM et al., intitulé "Multi-carrier demodulators for on-board processing satellites" paru dans INTERNATIONAL JOURNAL OF SATELLITE COMMUNICATIONS, vol.6, p. 243 - 51 (1988). Typiquement deux méthodes sont proposées pour cette approche dite "par canal". Une première méthode consiste en un décalage en fréquence des porteuses respectives modulées multiplexées afin de les transposer en bande de base, puis en un filtrage passe-bas. La seconde méthode, équivalente, consiste en l'utilisation de filtres passe-bande qui présentent des gabarits décalés en fréquence entre eux d'un filtre passe-bas élémentaire. Le bloc-diagramme du démultiplexeur montre une pluralité de branches incluant chacune respectivement un filtre de canal.

Selon la première méthode précitée, il est supposé que la fonction de transfert d'un filtre passe-bas $h_i(z)$ pour filtrer une porteuse modulée d'une largeur de bande donnée s'écrit sous forme de transformée en z :

$$h_i(z) = \sum_{n=O}^{N-1} h(n) z^{-n}$$

Pour un filtre $F_i$, i étant un entier compris entre 0 et (N-1), dans une $i^{ième}$ branche donnée, un premier traitement numérique consiste à décaler en bande de base la porteuse associée au $i^{ième}$ canal. Appelons x(k) la séquence entrante numérique échantillonnée des porteuses modulées multiplexées. Ce premier traitement consiste à produire, à partir de la séquence x(k), la séquence:

$$x_i(k) = x(k)\exp(-j.\omega_i kM)$$

dans laquelle exp désigne l'opérateur exponentielle complexe, $\omega_i$ est la fréquence centrale angulaire du $i^{ième}$

canal, et M est un facteur de décimation. Un second traitement numérique consiste ensuite à filtrer en passe-bas cette séquence $x_i(k)$, pour un $i^{ème}$ canal à largeur de bande donnée. Le filtre passe-bas $h_i(z)$ assure ce traitement.

Ainsi pour un $i^{ème}$ canal, la séquence numérique de la porteuse $Y_i(k)$, démultiplexée en bande de base, s'écrit :

$$Y_i(k) = \sum_{n=0}^{N-1} h(n)\,x(kM-n)\,.\,e^{-j\omega_i(kM-n)}.$$

Concernant la seconde méthode relative au démultiplexeur de la figure 5, il est proposé d'utiliser pour une $i^{ème}$ branche, un filtre passe-bande présentant une fonction de transfert en z qui est obtenue à partir de la fonction de transfert en z d'un filtre passe-bas, s'écrivant :

$$h(z) = \sum_{n=0}^{N-1} h(n)\,.\,z^{-n}$$

Un résultat similaire au résultat issu de la première méthode est alors obtenu.

La figure 6 montre un bloc-diagramme schématique fonctionnel d'un dispositif de démultiplexage 10 selon l'invention.

Des porteuses modulées multiplexées en fréquence relatives à des canaux ayant des largeurs de bande différentes sont appliquées à une entrée d'un premier étage de filtrage comprenant deux filtres du type précité "filtre par canal", dont des sorties respectives sont appliquées à un démultiplexeur polyphasé 105 ayant un rôle sensiblement analogue à celui présenté initialement dans la description de la technique antérieure.

Il est à noter que dans la configuration montrée à la figure 6, le nombre de groupes comprenant chacun des canaux à porteuses modulées ayant des largeurs de bande identiques est égal à 2. Une extension à un nombre quelconque de groupes incluant chacun des canaux à largeurs de bande identiques entre également dans le cadre de l'invention, en ajoutant des circuits similaires à ceux associés à l'un des groupes de canaux définis ci-dessous pour deux configurations d'un dispositif de démultiplexage à filtres programmables selon l'invention. Les deux configurations montrées en référence aux figures 7A et 8A concernent également le cas où deux groupes de porteuses modulées à largeurs de bande identiques respectives sont multiplexés en fréquence.

Il est également supposé à des fins de simplification de la description que des canaux de porteuses modulées de l'un des groupes, dit GROUPE 1, ont des bandes de fréquence $f_1$ quatre fois moins larges que les bandes de fréquence $f_2$ des canaux de l'autre groupe, dit GROUPE 2. Les largeurs de bande $f_1$ et $f_2$ sont considérées ici égale aux largeurs de bande minimale et maximale des canaux multiplexés en fréquence qu'est susceptible de traiter le dispositif de démultiplexage en fréquence. La bande $f_1$ est un sous-multiple entier de la bande de fréquence utile $f_u$, soit typiquement $f_1 = f_u/16$ et également un sous-multiple entier de la bande $f_2$ soit $f_1 = f_2/4$. Néanmoins, le dispositif de démultiplexage peut être utilisé dans d'autres applications, tel que le réseau RNIS pour des accès en bande de base (144 kbit/s) et des accès primaires (1544 kbit/s et/ou 2048 kbit/s), dans lequel les rapports entre largeurs de bande des canaux sont différents de quatre, des largeurs étant données par $f_1$, $f_2 = 11f_1$ et $f_3 = 15f_1$.

En référence à la figure 7A, le dispositif de démultiplexage en fréquence 10 selon l'invention comprend un étage 102 ayant deux filtres $102_1$ et $102_2$ suivis de deux décimateurs $102_{1'}$ et $102_{2'}$ pour deux groupes respectifs de canaux à largeurs de bande identiques, un étage 103 de deux circuits de commutation d'interconnexion $103_1$ et $103_2$ à quatre sorties chacun, un étage 104 de lignes à retard 104a, 104b, 104c et 104d, un étage 105 incluant quatre réseaux polyphasés $105_a$, $105_b$, $105_c$, $105_d$ et un circuit de multiplication complexe $105_5$ (Transformateur de Fourier). Les étages sont mis en cascade suivant l'ordre d'énumération précité, les filtres de groupe $102_1$ et $102_2$ reçoivent sous forme échantillonnée les porteuses modulées multiplexées en fréquence, et les porteuses modulées démultiplexées en bande de base sont produites à des sorties du circuit de multiplication complexe $105_5$.

La première configuration du dispositif de démultiplexage présentée à la figure 7A résulte d'un trafic des liaisons montantes représenté fréquentiellement à la figure 7B. Comme montré dans cette figure, la bande de fréquence totale utile $f_u$ allouée aux liaisons montantes est indiquée, à des fins de simplification, sous forme normalisée $f_{nor}$, et les porteuses de canal modulées multiplexées en fréquence sont regroupées en deux groupes en fonction de leur largeur de bande. On distingue huit porteuses modulées $P_1^1$ à $P_8^1$ dans un premier groupe et deux porteuses modulées $P_1^2$ à $P_2^2$ dans un second groupe. Il est rappelé que les canaux dans le second groupe sont supposés, selon cette configuration, avoir chacun une largeur de bande $f_2$ quatre fois supérieure à la largeur de bande $f_1$ de chacun des canaux dans le premier groupe soit au total $8f_1 + 2f_2 = f_u$.

Le dispositif de démultiplexage 10 selon l'invention est précédé d'un échantillonneur 101 qui reçoit le signal à

multiporteuse de liaisons montantes SM et échantillonne les (8 + 2) = 10 porteuses modulées multiplexées en fréquence, à une fréquence initiale 1/T pour produire des échantillons du signal à multiporteuse. Les porteuses modulées multiplexées en fréquence ainsi échantillonnées sont appliquées aux entrées des deux filtres $102_1$ et $102_2$ de l'étage 102. Typiquement ces filtres, tels qu'ils ont été présenté selon la technique antérieure, comprennent, en outre, des filtres passe-bande ou des filtres passe-bas élémentaires. Leurs fonctions respectives est de filtrer les deux groupes de porteuses à largeur de bande identique. Ainsi le filtre $102_1$ est affecté au GROUPE 1 et filtre les porteuses de ce groupe en globalité, tandis que le filtre $102_2$ filtre les porteuses modulées du second groupe GROUPE 2. Les décimateurs $102_1$' et $102_2$', reliés en série respectivement avec les filtres $102_1$ et $102_2$, réduisent la fréquence des signaux issus des filtres $102_1$ et $102_2$. En effet, il est possible de réduire la fréquence d'échantillonnage initiale respectivement pour chaque groupe de porteuses GROUPE 1 et GROUPE 2 sans en affecter les porteuses modulées multiplexées respectives (Théorème de Shannon). Cette réduction par deux de la fréquence des signaux aux sorties des filtres $102_1$ et $102_2$ est équivalente à une réduction par deux du nombre des échantillons en sortie des filtres, ce qui conserve le nombre d'échantillons et donc la bande de fréquence totale $f_u$ du signal entrant à multiporteuse SM, en sortie de l'étage 102. Les décimations contribuent à diminuer les capacités en calcul nécessaires, notamment au sein du circuit de multiplication complexe $105_5$. Les facteurs de décimation dans les filtres de décimation $102_1$' et $102_2$' sont dans cette configuration de trafic égaux à 1/2.

Avant de présenter les étages 103 et 104, l'étage 105 constitué des réseaux polyphasés $105_a$ à $105_d$ et du circuit de multiplication complexe $105_5$ est maintenant décrit.

Les quatre réseaux polyphasés $105_a$ à $105_d$ sont constitués chacun par quatre branches en parallèle. Chaque branche comprend en série une ligne à retard et un filtre numérique élémentaire dont la transformée en z HpO à Hp15 s'écrit en un polynôme en z de dégré 16. Les sorties respectives des seize filtres numériques sont appliquées à des entrées du circuit de multiplication complexe pour transformée de Fourier rapide (TFR) $105_5$. Les porteuses modulées démultiplexées de chaque groupe en bande de base sont produites à des sorties respectives du circuit $105_5$. Le degré 16 des polynômes en z relatifs aux filtres numériques dans les réseaux polyphasés est induit par le fait, conformément à la description de la technique antérieure, que NP=16 porteuses modulées du GROUPE 1, c'est-à-dire NP=16 porteuses ayant une largeur de bande minimale $f_1$ et constituant un ensemble de porteuse inclus dans la bande de fréquence totale prédéterminée $f_u$ du signal entrant, peuvent être démultiplexées. Le filtre passe-bas élémentaire pour déduire chacun des filtres HpO à Hp15 a ainsi une largeur de bande égale à la largeur de bande minimale $f_1$ de canaux qu'est susceptible de supporter le signal entrant à multiporteuse SM.

Néanmoins, selon l'invention, les lignes à retard numériques disposées en amont des filtres numériques respectifs ne possèdent pas des transformées en z variant successivement de $z^{-O}$ à $z^{-15}$. Cette différence par rapport aux réseaux polyphasés selon la technique antérieure est précisée ci-dessous.

L'étage à réseaux polyphasés 105 doit démultiplexer à la fois des porteuses modulées du GROUPE 1 et des porteuses modulées du GROUPE 2 qui ne correspondent pas à des canaux ayant des largeurs de bande égales. L'utilisation d'un réseau polyphasé unique ne permettrait pas ce démultiplexage. A cette fin, l'étage 104 de lignes à retard comprend, selon les configurations illustrées, quatre lignes à retard $104_a$, $104_b$, $104_c$ et $104_d$ dont les sorties respectives sont appliquées aux réseaux polyphasés $105_a$ à $105_d$ respectivement. Selon les réalisations préférées, les quatres lignes à retard dans chacun des réseaux polyphasés présentent des transformées en z s'écrivant respectivement $z^{-O}$, $z^{-4}$, $z^{-8}$ et $z^{-12}$. Dans ces conditions, un démultiplexeur déduit de la technique antérieure pour démultiplexer seize porteuses modulées à largeurs de bande identiques comprendrait des lignes à retard dans l'étage 104 s'écrivant $z^{-O}$, $z^{-1}$, $z^{-2}$ et $z^{-3}$. Dans chaque réseau polyphasé, la mise en parallèle de quatre lignes à retard qui sont reliées respectivement avec des filtres numériques déduits d'un filtre passe-bas élémentaire (associés avec les moyens de multiplication complexe de la transformée de Fourier) permet d'obtenir un filtre en fréquence ayant une largeur de bande $f_2/f_1$ = 4 fois supérieure à la largeur de bande du filtre élémentaire, afin de restituer une porteuse modulée du GROUPE 2 ayant une largeur de bande quatre fois supérieure à la largeur de bande d'une porteuse du GROUPE 1 filtrée par le filtre élémentaire.

Les lignes à retard $104_a$ à $104_d$ représentées dans la figure 7A sous forme modélisée en transformée en z, sont dans la pratique des circuits numériques à base de registres à décalage et autres composants numériques de base, qui sont cadencés à une fréquence égale à la fréquence initiale 1/T d'échantillonnage. Comme vu précédemment, la fréquence initiale de la séquence d'échantillons des porteuses modulées multiplexées à la sortie de l'échantillonneur 101 est réduite, par des facteurs donnés respectifs, aux sorties des décimateurs $102_1$' et $102_2$'. Selon la répartition fréquentielle des porteuses indiquée à la figure 7B, les circuits de commutation $103_1$ et $103_2$ interconnectent les sorties des décimateurs $102_1$' et $102_2$' respectivement aux lignes à retard 104a, 104b et 104c, 104d, en fonction précisément des fréquences réduites respectives des séquences d'échantillons issues des deux décimateurs $102_1$' et $102_2$' par rapport à la fréquence d'échantillonnage initiale. Ainsi, en pratique, les moyens de commutation $103_1$ et $103_2$ relient sélectivement les sorties des décimateurs $102_1$' et $102_2$' à des entrées de lignes à retard dans l'étage 104 en fonction des fréquences des séquences issues desdits décimateurs, et donc de la largeur de bande totale affectée à chaque groupe de porteuses modulées multiplexées.

Les retards conférés par les lignes à retard de l'étage 104 sont programmés respectivement en dépendance des fréquences réduites des séquences qu'elles reçoivent à travers l'étage de commutation 103 par rapport à la fréquence de cadencement des lignes à retard (égale à la fréquence initiale 1/T d'échantillonnage). Ainsi le retard d'un échantillon d'une séquence à fréquence réduite de moitié, pour les deux groupes, équivaut à deux périodes d'échantillon du signal échantillonné à multiporteuse puisque la fréquence des séquences réduites est deux fois inférieure à la fréquence d'échantillonnage. Dans la réalisation de la figure 7A, deux lignes à retard $104_a$ et $104_b$, $104_c$ et $104_d$ ayant des fonctions de transfert $z^{-0}$ et $z^{-2}$ sont ainsi attribuées à chaque groupe de porteuse étant donné que les deux groupes de porteuses possèdent des largeurs de bande égales.

Les sorties des lignes à retard $104_a$ à $104_d$ sont appliquées respectivement aux quatre réseaux polyphasés $105_a$ à $105_d$ indépendamment du trafic des liaisons montantes.

Toutes les sorties des filtres Hp0 à Hp15 dans les quatres réseaux polyphasés $105_a$ à $105_d$ sont appliquées à des entrées du circuit de multiplication complexe $105_5$ dont les 16 sorties sont divisées en deux groupes, à raison de huit sorties qui sont attribuées aux huit porteuses en bande de base du GROUPE 1, et de huit autres sorties qui sont séparées en deux ensembles de quatre sorties qui sont attribuées aux deux porteuses en bande de base du second groupe GROUPE 2, puisque les porteuses du GROUPE 2 ont des largeurs de bande quatre fois supérieure aux largeurs de bande des porteuses du GROUPE 1. Dans le circuit $105_5$, le traitement numérique de multiplication complexe réalisé sur les séquences sortant des branches des réseaux polyphasés $105_a$ à $105_d$ est réalisé par un moyen matriciel 8 x 8 et quatre moyens matriciels 2 x 2.

Le moyen matriciel 8 x 8 reçoit les séquences sortant des filtres HpO à Hp7 inclus dans les réseaux $105_a$ et $105_b$ et restitue les huit canaux numériques du GROUPE 1 correspondant aux porteuses $P_1^1$ à $P_8^1$ à huit premières sorties du circuit $105_5$. Ce moyen matriciel effectue un calcul numérique déduit, en termes de fonction de transfert, d'une matrice de coefficients telle que celle défini ci-dessus en fonction de $V = \exp[-j2\pi/N]$, avec $N = 8$.

La répartition du traitement numérique des deux porteuses $P_1^2$ et $P_2^2$ dans le GROUPE 2 en quatre moyens matriciels carrés dans le circuit $105_5$ résulte du fait que chacun des canaux du GROUPE 2 est équivalent à une juxtaposition de quatre largeurs de bande élémentaires $f_1$, et par suite deux portions analogues de largeurs de bande élémentaire dans les canaux de porteuses $P_1^2$ et $P_2^2$ sont corrélés dans l'étage 102.

Ainsi, chacun des moyens matriciels 2 x 2 est relié aux sorties de deux filtres respectifs dans les réseaux $105_c$ et $105_d$ qui correspondent à la même sous-bande de base de fréquence de largeur $f_1$ dans les canaux de porteuses $P_1^2$ et $P_2^2$ , c'est-à-dire reçoivent des séquences numériques ayant subi un même retard dans les réseaux $105_c$ et $105_d$.

Un premier moyen matriciel 2 x 2 traite les séquences sortant des filtres Hp8 et Hp12 précédés de lignes à retard $z^{-0}$ dans les réseaux $105_c$ et $105_d$ et ainsi de suite pour les trois autres moyens de matriciel 2 x 2. Le quatrième et dernier moyen matriciel 2 x 2 traite par conséquent les séquences sortant des filtres Hp11 et Hp15 précédés des lignes à retard $z^{-12}$ dans les réseaux $105_c$ et $105_d$. Chacun des réseaux 2 x 2 fait appel à une matrice carrée de coefficients et restitue un quart de la largeur de bande des canaux des porteuses $P_1^2$ et $P_2^2$.

En référence à la figure 8A, une seconde configuration du démultiplexeur 10 est présentée, pour un trafic des liaisons montantes représentées à la figure 8B. Selon ce trafic, le GROUPE 1 comprend quatre canaux consécutifs à porteuses modulées $P_1^1$ à $P_4^1$ et à largeur de bande de fréquence $f_1$, tandis que le GROUPE 2 comprend trois canaux consécutifs à porteuses $P_1^2$ à $P_3^2$ et à largeur de bande de fréquence $f_2 = 4f_1$. Cette seconde configuration ne modifie pas l'aspect structurel du démultiplexeur 10 de la première configuration montrée à la figure 7A. Seul le fonctionnement du démultiplexeur est modifié grâce à la programmation de certains éléments du démultiplexeur 10 en fonction de la répartition du trafic. Les éléments programmables sont les filtres $102_1$ et $102_2$, les décimateurs $102_1$' et $102_2$' ,les lignes à retard $104_a$ à $104_d$, et les moyens matriciels dans le circuit de multiplication complexe $105_5$. Selon une réalisation préférée, la programmation de ces divers éléments est réalisée au moyen d'une unité de commande UC montrée à la figure 2, qui reçoit toutes les caractéristiques de chaque nouvelle répartition du trafic à travers la liaison spécialisée montante LS.

Dans cette seconde configuration de trafic, les filtres $102_1$ et $102_2$ sont programmés avec des largeurs de bande de $f_u/4$ et $3f_u/4$ pour séparer les deux groupes 1 et 2 qui n'ont plus les mêmes largeurs de bande que dans la configuration de la figure 7B. Les facteurs de réduction des décimateurs $102_1$' et $102_2$' sont ajustés en fonction des nouvelles largeurs de bande $f_u/4$ et $3f_u/4$, et sont égaux à 1/4 et 3/4.

Concernant les lignes à retard dans l'étage 104, ces dernières sont programmées en fonction des nouveaux facteurs de réduction. La première ligne à retard $104_a$ a encore une fonction de transfert $z^{-0}$ puisque le réseau polyphasé $105_a$ est encore attribué au traitement des porteuses $P_1^1$ à $P_4^1$. Puisque trois échantillons sur quatre du signal à multiporteuse sont à traiter en sortie du décimateur $102_2$', trois lignes à retard $104_b$, $104_c$ et $104_d$ sont reliées à la sortie du décimateur $102_2$' à travers le circuit de commutation $103_2$ dont trois sorties sont utilisées. Les lignes à retard $104_b$, $104_c$ et $104_d$ imposent respectivement des retards dans des rapports respectifs de (4 x 0)/3, (4 x 1)/3 et (4 x 2)/3 avec la fréquence d'échantillonnage 1/T.

Le circuit de multiplication complexe $105_5$ est programmé alors en un moyen matriciel 4 x 4 et quatre moyens matriciels 3 x 3. Le moyen matriciel 4 x 4 est relié aux sorties des filtres Hp0 à Hp3 dans le réseau polyphasé $105_a$

pour restituer les porteuses $P_1^1$ à $P_4^1$ du GROUPE 1. Les quatre moyens matriciels 3 x 3 sont reliés respectivement aux ensembles à trois filtres, Hp4-Hp8-Hp12, Hp5-Hp9-Hp13, Hp6-Hp10-Hp14 et Hp7-Hp11-Hp15 relatifs aux quatre sous bandes de largeur $f_1$ dans les canaux des trois porteuses $P_1^2$ , $P_2^2$ et $P_3^2$ , de manière à restituer ces canaux.

## Revendications

**1.** Dispositif pour démultiplexer des canaux multiplexés en fréquence dans un signal échantillonné à multiporteuse (SM) définissant une bande de fréquence utile ayant une largeur prédéterminée ($f_u$),

lesdits canaux étant définis par des porteuses modulées ($P_1^1$ à $P_4^1$, $P_1^2$ à $P_3^2$ ) comprises dans la bande de fréquence utile et par des largeurs de bande de fréquence ($f_1$, $f_2$) juxtaposées dans la bande de fréquence utile, les largeurs de bande de fréquence desdits canaux étant des sous-multiples entiers d'une largeur de bande maximale de canal ($f_2$) qui elle-même est sous-multiple de la largeur de la bande de fréquence utile ($f_u$), et étant multiples entiers d'une largeur de bande minimale de canal ($f_1$),
ledit dispositif (10) comprenant des ensembles parallèles incluant chacun une ligne à retard et un filtre numérique en série en un nombre prédéterminé ($f_u/f_1$ = 16) égal au rapport entre la largeur de la bande utile ($f_u$) et la largeur de bande minimale ($f_1$) de canal, et des moyens de traitement numérique à transformée de Fourier ($105_5$), dont des entrées respectives sont reliées à des sorties des filtres numériques desdits ensembles parallèles (HpO à Hp15), pour restituer individuellement lesdits canaux, chacun desdits filtres étant déduit d'un filtre passe-bas numérique filtrant dans ladite largeur de bande minimale de canal ($f_1$),

caractérisé en ce qu'il comprend

- plusieurs moyens numériques de filtrage et décimation (102) pour séparer les canaux dans le signal échantillonné à multiporteuse (SM) en des groupes de canal (GROUPE 1, GROUPE 2) en un nombre prédéterminé, chaque groupe de canal comprenant des bandes de fréquence juxtaposées de tous les canaux qui ont une même largeur de bande qui est différente des largeurs de bande des autres canaux,
- plusieurs lignes à retard parallèles (104) en un nombre prédéterminé ($f_u/f_2$ = 4) égal au rapport entre la largeur de bande de fréquence utile ($f_u$) et la largeur de bande maximale ($f_2$) de canal, chaque groupe de canal (GROUPE 1; GROUPE 2) étant retardé par un nombre desdites lignes à retard parallèles respectives ($104_a$; $104_b$ ; $104_c$; $104_d$) égal au plus proche entier supérieur du rapport entre une largeur de bande de fréquence dudit groupe ($f_u$/4; 3$f_u$/4) et la largeur de bande maximale de canal ($f_2 = f_u/4$), et
- plusieurs réseaux polyphasés identiques parallèles ($105_a$, $105_b$, $105_c$, $105_d$) respectivement reliés aux sorties des lignes à retard parallèles (104a; $104_b$ ; $104_c$; $104_c$) comprenant chacun plusieurs desdits ensembles parallèles à ligne à retard et filtre numérique en un nombre prédéterminé égal au rapport entre les largeurs de bande maximale ($f_2$) et minimale ($f_1$) de canal.

**2.** Dispositif conforme à la revendication 1, caractérisé en ce que chacun desdits moyens de filtrage et décimation séparant un desdits groupes de canal dans le signal à multiporteuse (SM) comprend un filtre numérique ($102_1$; $102_2$) ayant la largeur de bande dudit groupe, suivi d'un décimateur ($102_1$'; $102_2$') ayant un rapport de réduction égal au rapport entre ladite largeur de bande ($f_u$/4; 3$f_u$/4) dudit groupe et la largeur de la bande de fréquence utile ($f_u$).

**3.** Dispositif conforme à la revendication 1 ou 2, caractérisé en ce que les lignes à retard parallèles ($104_b$; $104_c$ ; $104_d$) retardant un groupe de canal (GROUPE 2) imposent des retards respectivement en proportion des multiples entiers à partir de zéro du rapport entre la largeur de bande de fréquence utile ($f_u$) et la largeur de bande (3$f_u$/4) dudit groupe.

**4.** Dispositif conforme à l'une quelconque des revendications 1 à 3, caractérisé en ce que les lignes à retard ($z^{-0}$, $z^{-4}$, $z^{-8}$, $z^{-12}$) incluses dans chaque réseau polyphasé ($105_a$, $105_b$, $105_c$, $105_d$) imposent des retards respectivement en proportion de multiples entiers à partir de zéro dudit rapport ($f_2/f_1$) entre les largeurs de bande maximale et minimale de canal.

**5.** Dispositif conforme à l'une quelconque des revendications 1 à 4, caractérisé en ce que les moyens de traitement numérique ($105_5$) comprennent, pour chaque groupe de canal (GROUPE 2), plusieurs moyens matriciels carrés de coefficients de transformée de Fourier en nombre égal au rapport entre la largeur de bande des canaux dudit groupe ($f_2$) et la largeur de bande minimale de canal ($f_1$), une dimension de chacun des moyens matriciels associés

audit groupe étant égale au nombre de canaux dans ledit groupe.

6. Dispositif conforme à l'une quelconque des revendications 1 à 5, caractérisé en ce que les moyens numériques de filtrage et décimation (102), les lignes à retard parallèles (104) et les moyens de traitement numérique ($105_5$) sont programmables par des moyens de commande (UC) recevant des caractéristiques relatives au nombre prédéterminé et à la répartition des groupes de canal dans la bande de fréquence utile ($f_u$) et des nombres de canaux dans lesdits groupes, et en ce que le dispositif comprend plusieurs moyens de commutation ($103_1$, $103_2$) respectivement reliés aux sorties des moyens numériques de filtrage et décimation (102) et commandés par les moyens de commande (UC) pour relier sélectivement des sorties respectives de ces moyens numériques (102) à des entrées des lignes à retard parallèles en fonction de ladite répartition des groupes et desdits nombres de canaux dans les groupes.

## Patentansprüche

1. Vorrichtung zum Demultiplexen frequenzmultiplexter Kanäle aus einem abgetasteten Mehrfachträgersignal (SM), welches ein Nutz-Frequenzband mit vorgegebener Breite ($f_u$) definiert,
wobei die Kanäle durch in dem Nutzfrequenzband enthaltene modulierte Träger ( bis , bis ) sowie durch die im Nutzfrequenzband nebeneinander liegenden Frequenzbandbreiten ($f_1$ , $f_2$ ) definiert sind, wobei die Frequenzbandbreiten der Kanäle ganzzahlige Teiler einer maximalen Kanalbandbreite ($f_2$) sind, die selbst wieder Teiler der Nutzfrequenzbandbreite ($f_u$) ist, sowie ganzzahlige Vielfache einer minimalen Kanalbandbreite ($f_1$) sind, wobei die Vorrichtung (10) parallele Einrichtungen aufweist, von denen jede eine Verzögerungsleitung und ein Digitalfilter in Reihe in vorbestimmter Anzahl ($f_u$ /$f_l$ = 16) aufweist, die gleich dem Verhältnis zwischen der Nutzbandbreite ($f_u$) und der minimalen Kanalbandbreite ($f_1$) ist, und wobei die Vorrichtung ferner digital arbeitende Fourier-Transformationsmittel ($105_5$) aufweist, deren jeweilige Eingänge mit den Ausgängen der Digitalfilter der parallelen Einrichtungen (Hp0 bis Hp15) verbunden sind, um individuell die Kanäle wiederherzustellen, wobei jedes der Filter von einem digitalen Tiefpaßfilter abgeleitet ist, das die minimale Kanalbandbreite ($f_1$) filtert,
gekennzeichnet durch

   - mehrere digitale Filter- und Dezimations-Einrichtungen (102), um die Kanäle in dem abgetasteten Mehrfachträgersignal (SM) in Kanalgruppen (GROUPE 1, GROUPE 2) in vorbestimmter Anzahl zu separieren, wobei jede Kanalgruppe nebeneinanderliegende Frequenzbänder aus allen Kanälen aufweist, die eine gleiche von der Bandbreite der anderen Kanäle verschiedene Bandbreite besitzen,
   - mehrere parallele Verzögerungsleitungen (104) von vorgegebener Anzahl ($f_u$ /$f_2$ = 4), die gleich dem Verhältnis zwischen der Nutzbandbreite ($f_u$) und der maximalen Kanalbandbreite ($f_2$) ist, wobei jede Kanalgruppe (GROUPE 1; GROUPE 2) durch eine Anzahl jeweiliger paralleler Verzögerungsleitungen ($104_a$ ; $104_b$ ; $104_c$ ; $104_d$) verzögert wird, die gleich der nächsthöheren ganzen Zahl zu dem Verhältnis zwischen einer Frequenzbandbreite der Gruppe ($f_u$/4; 3$f_u$/4) und der maximalen Kanalbandbreite ist, sowie durch
   - mehrere parallele identische mehrphasige Netze ($105_a$, $105_b$, $105_c$, $105_d$), die jeweils mit den Ausgängen der parallelen Verzögerungsleitungen ($104_a$; $104_b$; $104_c$; $104_d$) verbunden sind, von denen jedes mehrere der parallelen Verzögerungs- und Digitalfiltereinrichtungen von einer vorgegebenen Anzahl aufweist, die gleich dem Verhältnis zwischen der maximalen Bandbreite ($f_2$) und der minimalen Kanalbandbreite ($f_1$) ist.

2. Vorrichtung nach Anspruch 1, dadurch gekennzeichnet, daß jede der Filter- und Dezimationseinrichtungen, die die Kanalgruppen in dem Mehrfachträgersignal (SM) separiert, ein Digitalfilter ($102_1$; $102_2$) mit einer Bandbreite der Gruppe aufweist, gefolgt von einem Dezimator ($102_{1'}$, ; $102_{2'}$) mit einem Reduktionsverhältnis, das gleich dem Verhältnis zwischen der Bandbreite ($f_u$/4; 3$f_u$/4) der Gruppe und der Nutzbandbreite ($f_u$) ist.

3. Vorrichtung nach Anspruch 1 oder 2, dadurch gekennzeichnet, daß die parallelen Verzögerungsleitungen ($104_b$ ; $104_c$ ; $104_d$), die eine Kanalgruppe (GROUPE 2) verzögern, Verzögerungen einführen, die jeweils im Verhältnis von ganzzahligen Vielfachen ausgehend von Null zu den Verhältnissen zwischen der Nutzbandbreite ($f_u$) und der Bandbreite (3$f_u$/4) der Gruppe stehen.

4. Vorrichtung nach einem der Ansprüche 1 bis 3, dadurch gekennzeichnet, daß die Verzögerungsleitungen ($z^{-0}$, $z^{-4}$, $z^{-8}$, $z^{-12}$), die in jedem mehrphasigen Netz ($105_a$ , $105_b$ , $105_c$ , $105_d$) enthalten sind, Verzögerungen einführen, die jeweils im Verhältnis der von Null ausgehenden ganzzahligen Vielfachen zu den Verhältnissen ($f_2$ /$f_1$) zwischen der maximalen Bandbreite und der minimalen Kanalbandbreite stehen.

5. Vorrichtung nach einem der Ansprüche 1 bis 4, dadurch gekennzeichnet, daß die digital arbeitenden Mittel ($105_5$) für jede Kanalgruppe (GROUPE 2) mehrere Quadratmatrixmittel von Fourier-Transformationskoeffizienten von einer Anzahl aufweisen, die geich dem Verhältnis zwischen der Kanalbandbreite der Gruppe ($f_2$) und der minimalen Kanalbandbreite ($f_1$) ist, wobei die Dimensionen jedes der der Gruppe zugeordneten Matrixmittel gleich der Anzahl der Kanäle in der Gruppe ist.

6. Vorrichtung nach einem der Ansprüche 1 bis 5, dadurch gekennzeichnet, daß die digitalen Filter- und Dezimationsmittel (102), die parallelen Verzögerungsleitungen (104) und die digital arbeitenden Mittel ($105_5$) durch Steuermittel (UC) programmierbar sind, welche Merkmale bezüglich der vorgegebenen Anzahl und der Einteilung der Kanalgruppen im Nutzfrequenzband ($f_u$) und der Kanalzahlen der Gruppen aufnehmen, und daß die Vorrichtung mehrere Kommutationsmittel ($103_1$ , $103_2$) umfaßt, die jeweils mit den Ausgängen der digitalen Filter- und Dezimationsmittel (102) verbunden und von den Steuermitteln (UC) gesteuert sind, um wahlweise die jeweiligen Ausgänge der digitalen Mittel (102) mit den Eingängen der parallelen Verzögerungsleitungen in Abhängigkeit von der Aufteilung der Gruppen und der Kanalzahlen in den Gruppen zu verbinden.

**Claims**

1. Device for demultiplexing frequency multiplexed channels in a multicarrier sampled signal (MS) defining a useful frequency band having a predetermined width ($f_u$),

   said channels being defined by modulated carriers ($P_1^1$ to $P_4^1$, $P_1^2$ to $P_3^2$) comprised in the useful frequency band and by frequency bandwidths ($f_1$, $f_2$) juxtaposed in the useful frequency band, the frequency bandwidths of said channels being integer sub-multiples of a maximum channel bandwidth ($f_2$) which itself is sub-multiple of the width of the useful frequency band ($f_u$), and being integer multiples of a minimum channel bandwidth ($f_1$), said device (10) comprising parallel sets each including a delay line and a digital filter in series in a predetermined number ($f_u/f_1 = 16$) equal to the ratio between the width of the useful band ($f_u$) and the minimum channel bandwidth ($f_1$), and Fourier transform digital processing means ($105_5$), whose respective inputs are connected to outputs of digital filters of said parallel sets (Hp0 to Hp15), for restoring individually said channels, each of said filters being deduced from a digital low-pass filter filtering in said minimum channel bandwidth ($f_1$),

   characterized in that it comprises

   - several digital filtering and decimation means (102) for separating the channels in the multicarrier sampled signal (SM) into channel groups (GROUP 1, GROUP 2) in a predetermined number, each channel group comprising juxtaposed frequency bands of all the channels which have a same bandwidth which is different from the bandwidths of other channels,
   - several parallel delay lines (104) in a predetermined number ($f_u/f_2 = 4$) equal to the ratio between the useful frequency bandwidth ($f_u$) and the maximum channel bandwidth ($f_2$), each channel group (GROUP1 ; GROUP 2) being delayed by a number of respective parallel delay lines ($104_a$; $104_b$; $104_c$; $104_d$) equal to the nearest upper integer of the ratio between a frequency bandwidth of said group ($f_u/4$; $3f_u/4$) and the maximum channel bandwidth ($f_2 = f_u/4$), and
   - several parallel identical polyphase networks ($105_a$; $105_b$; $105_c$; $105_d$) respectively connected to outputs of the parallel delay lines ($104_a$; $104_b$; $104_c$; $104_d$) each comprising several of said parallel delay line and digital filter sets in a predetermined number equal to the ratio between the maximum ($f_2$) and minimum ($f_1$) channel bandwidths.

2. A device according to claim 1, characterized in that each of said filtering and decimation means separating one of said channel groups in the multicarrier signal (SM) comprises a digital filter ($102_1$; $102_2$) having the bandwidth of said group and then a decimator ($102_1'$; $102_2'$) having a reduction ratio equal to the ratio between said bandwidth ($f_u/4$; $3f_u/4$) of said group and the width of the useful frequency band ($f_u$) .

3. A device according to claim 1, characterized in that the parallel delay lines ($104_b$; $104_c$; $104_d$) delaying a channel group (GROUP 2) impose delays respectively in proportion to integer multiples as from zero of the ratio between the useful frequency bandwidth ($f_u$) and the bandwidth ($3f_u/4$) of said group.

4. A device according to any one of the claims 1 to 3, characterized in that the delay lines ($z^{-0}$, $z^{-4}$, $z^{-8}$, $z^{-12}$) included in each polyphase network ($105_a$, $105_b$, $105_c$, $105_d$) impose delays respectively in proportion of integer multiples

as from zero of said ratio ($f_2/f_1$) between the maximum and minimum channel bandwidths.

**5.** A device according to any one of the claims 1 to 4, characterized in that the digital processing means ($105_5$) comprise, for each channel group (GROUP 2), several Fourier transform coefficient square matrix means in a number equal to the ratio between the bandwidth of the channels of said group ($f_2$) and the minimum channel bandwidth ($f_1$), a dimension of each of the matrix means associated to said group being equal to the number of channels in said group.

**6.** A device according to any one of the claims 1 to 5, characterized in that the digital filtering and decimation means (102), the parallel delay lines (104) and the digital processing means ($105_5$) are programmable by control means (UC) receiving characteristics relating to the predetermined number and to the distribution of the channel groups within the useful frequency band ($f_u$) and numbers of channels in said groups, and in that the device comprises several switching means ($103_1$, $103_2$) respectively connected to outputs of the digital filtering and decimation means (102) and controlled by the control means (UC) for connecting selectively respective outputs of these digital means (102) to inputs of the parallel delay lines as a function of said distribution of the groups and said numbers of channels in the groups.

*FIG. 1*

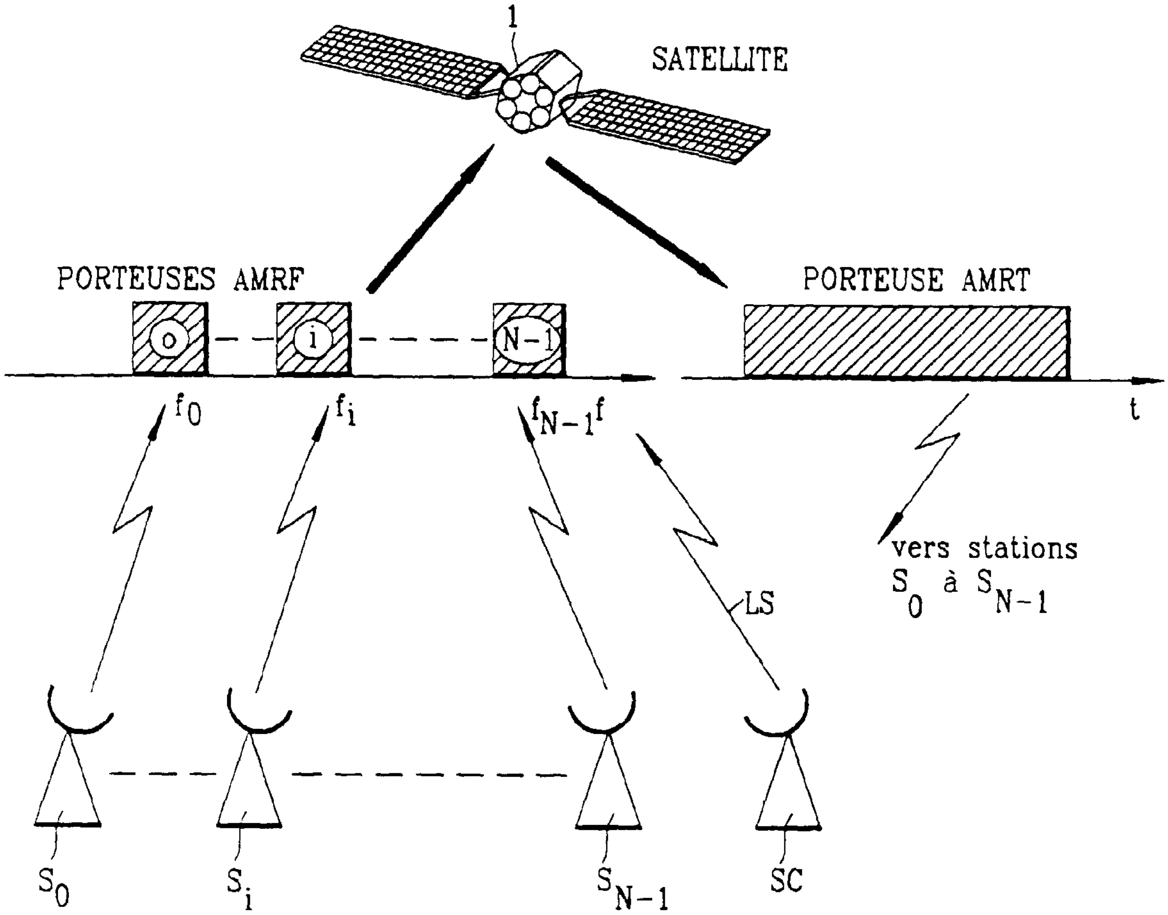
1
SATELLITE
PORTEUSES AMRF
o
i
N-1
$f_0$
$f_i$
$f_{N-1}$
f
PORTEUSE AMRT
t
vers stations
$S_0$ à $S_{N-1}$
LS
$S_0$
$S_i$
$S_{N-1}$
SC

*FIG. 3*

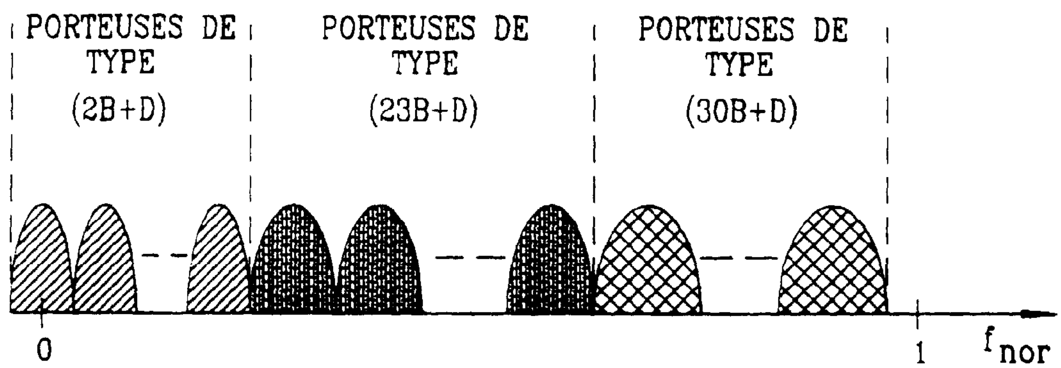
PORTEUSES DE TYPE (2B+D)
PORTEUSES DE TYPE (23B+D)
PORTEUSES DE TYPE (30B+D)
0
1
$f_{nor}$

FIG. 2

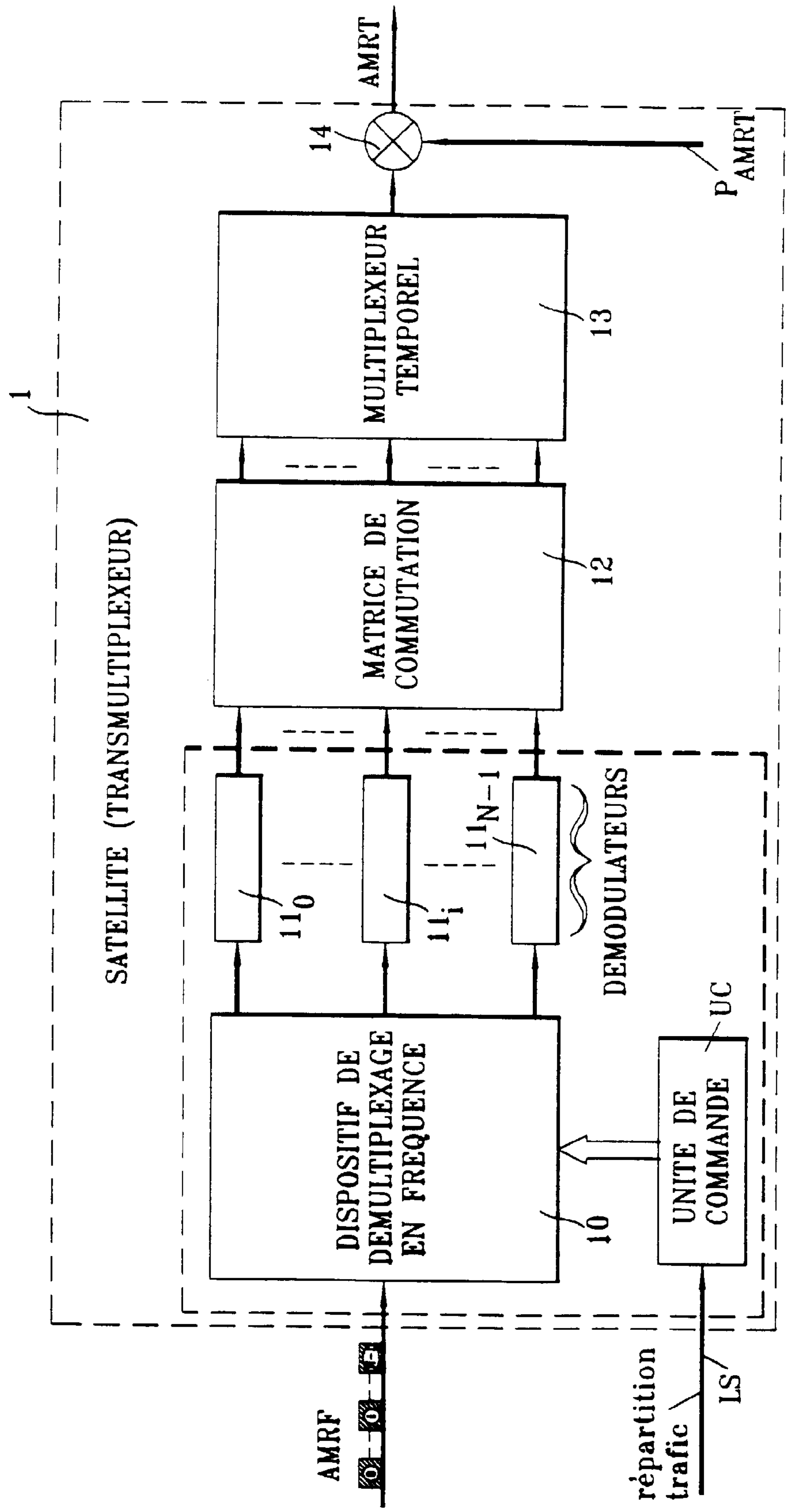
SATELLITE (TRANSMULTIPLEXEUR)
1
AMRF
DISPOSITIF DE DEMULTIPLEXAGE EN FREQUENCE
10
UNITE DE COMMANDE
UC
répartition trafic
LS
$11_0$
$11_i$
$11_{N-1}$
DEMODULATEURS
MATRICE DE COMMUTATION
12
MULTIPLEXEUR TEMPOREL
13
14
$P_{AMRT}$
AMRT

FIG. 4
(TECHNIQUE ANTERIEURE)

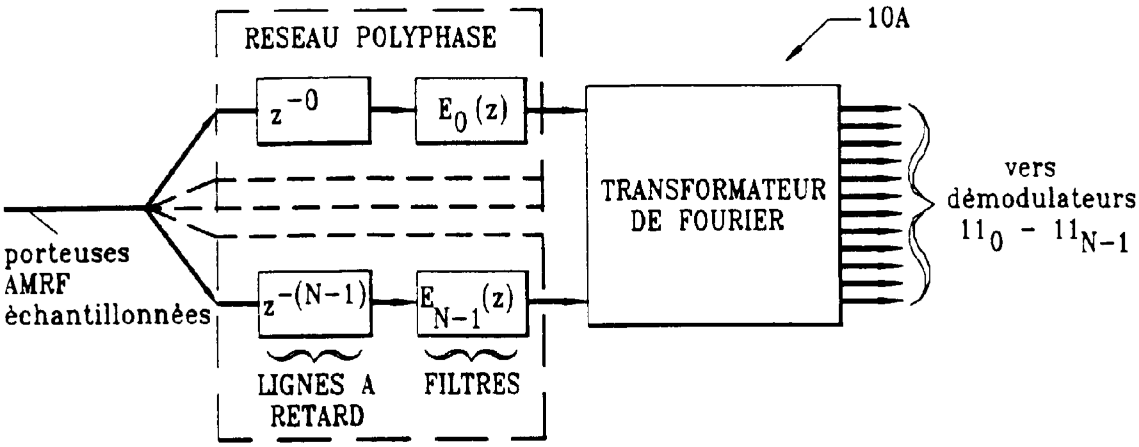


FIG. 5
(TECHNIQUE ANTERIEURE)

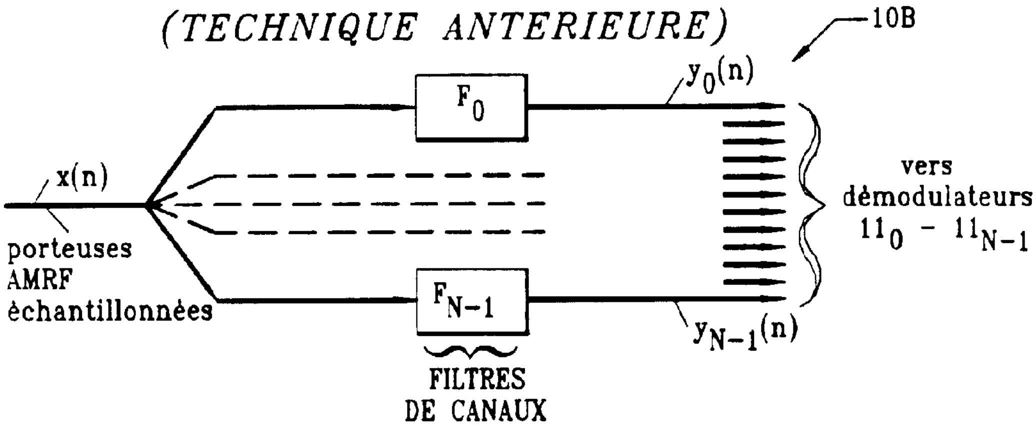


FIG. 6

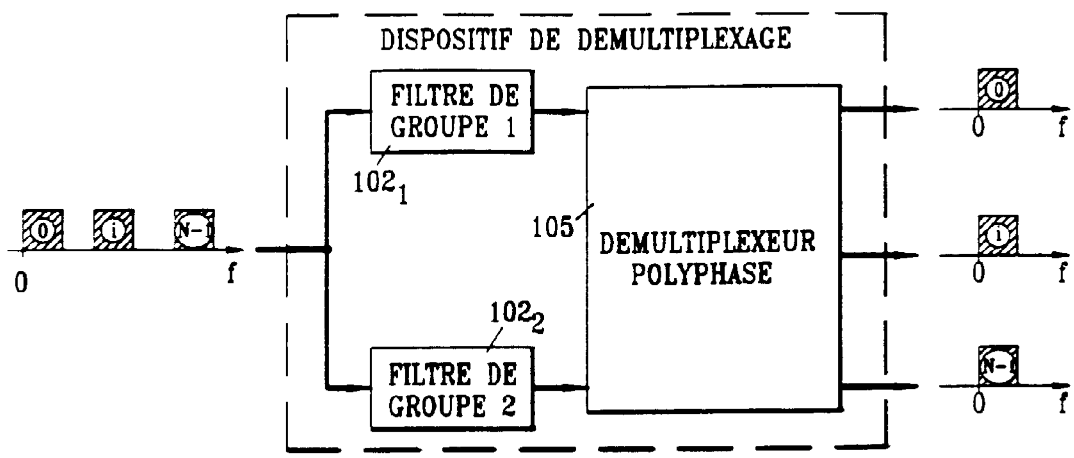

FIG.7A

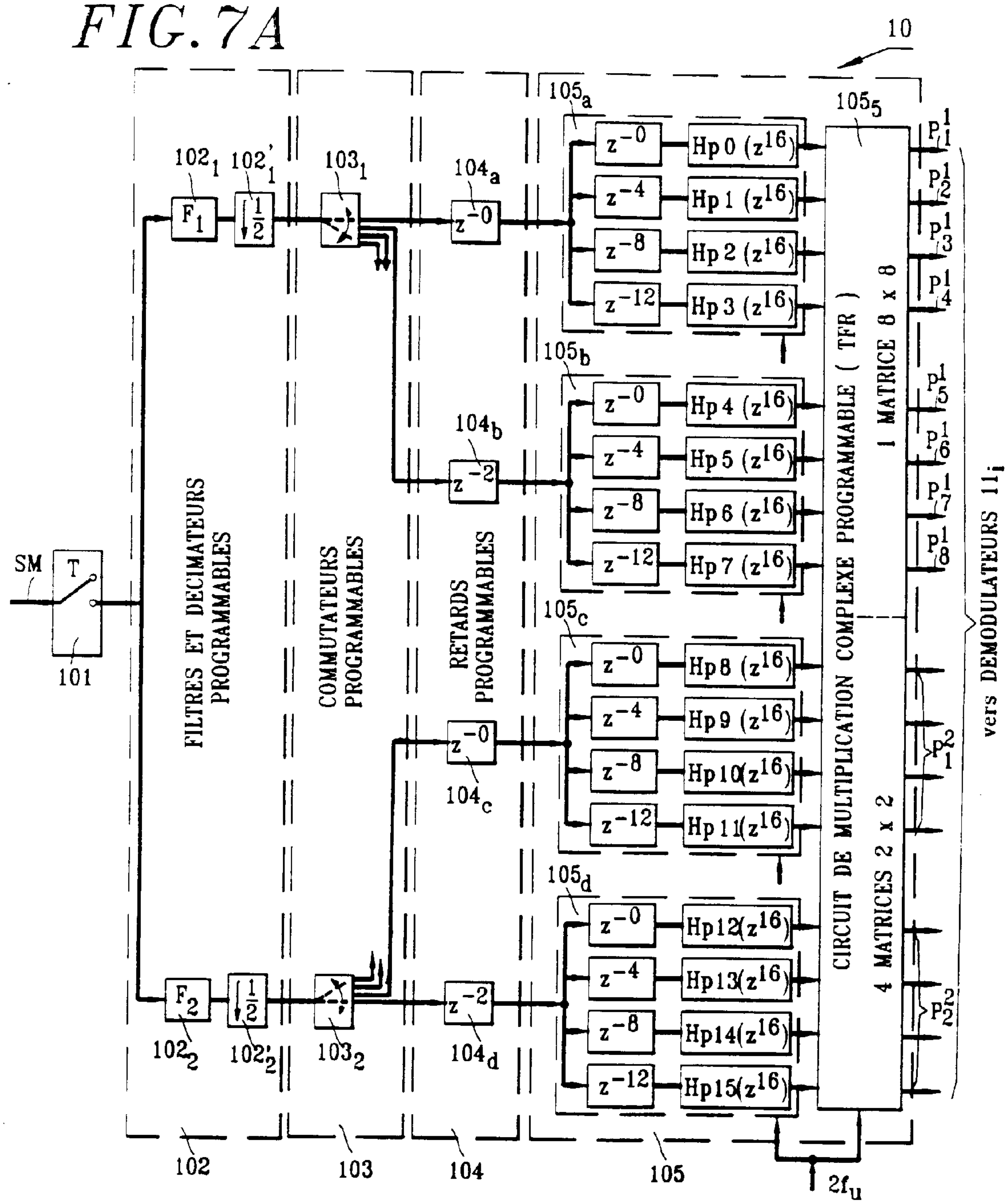
10
SM
T
101
FILTRES ET DECIMATEURS PROGRAMMABLES
COMMUTATEURS PROGRAMMABLES
RETARDS PROGRAMMABLES
CIRCUIT DE MULTIPLICATION COMPLEXE PROGRAMMABLE ( TFR )
1 MATRICE 8 x 8
4 MATRICES 2 x 2
vers DEMODULATEURS 11i
102
103
104
105
2fu

FIG.7B

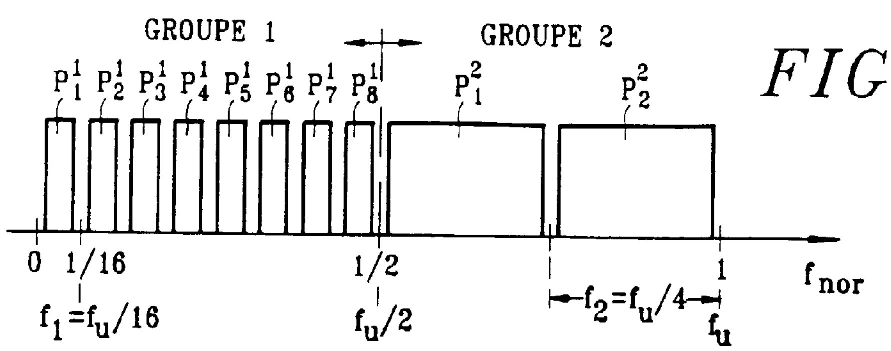
GROUPE 1
GROUPE 2
0
1/16
1/2
1
fnor
f1=fu/16
fu/2
f2=fu/4
fu

FIG.8A

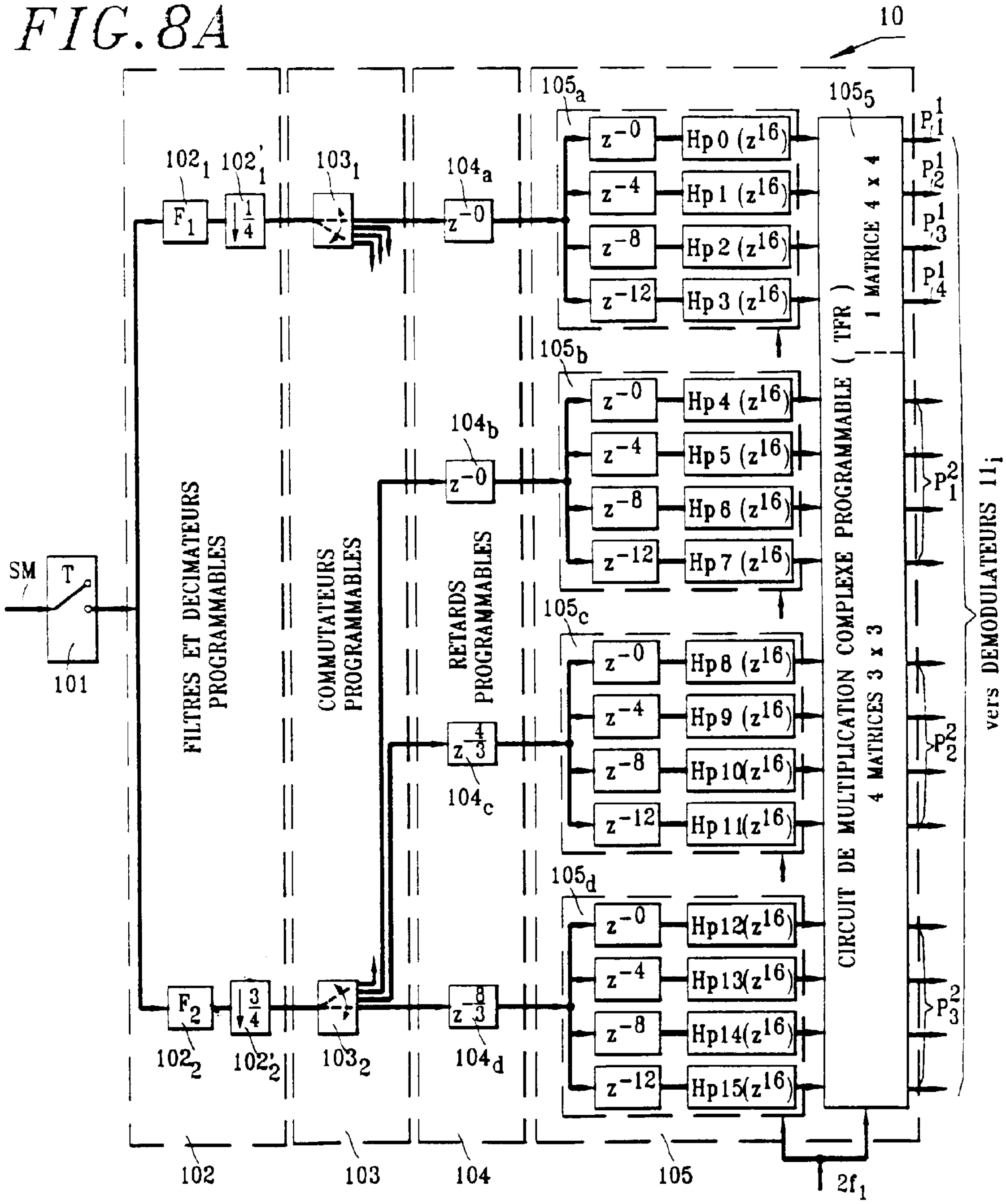
10
SM
T
101
FILTRES ET DECIMATEURS PROGRAMMABLES
COMMUTATEURS PROGRAMMABLES
RETARDS PROGRAMMABLES
CIRCUIT DE MULTIPLICATION COMPLEXE PROGRAMMABLE ( TFR )
1 MATRICE 4 x 4
4 MATRICES 3 x 3
vers DEMODULATEURS 11i
Hp 0 (z16)
Hp 1 (z16)
Hp 2 (z16)
Hp 3 (z16)
Hp 4 (z16)
Hp 5 (z16)
Hp 6 (z16)
Hp 7 (z16)
Hp 8 (z16)
Hp 9 (z16)
Hp 10(z16)
Hp 11(z16)
Hp12(z16)
Hp13(z16)
Hp14(z16)
Hp15(z16)
2f1
102
103
104
105

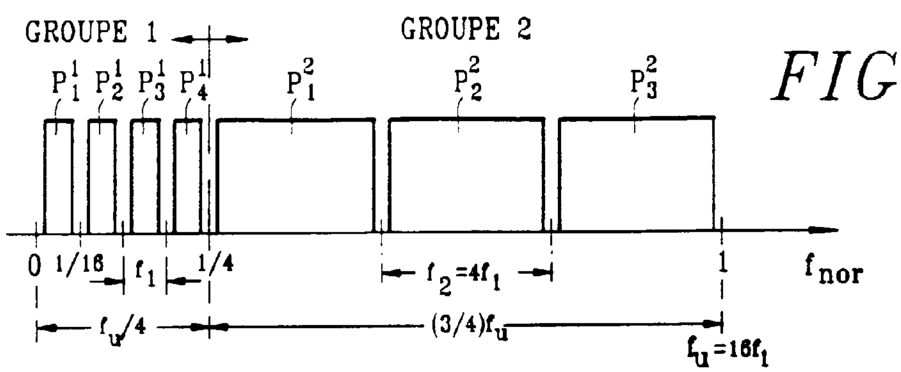
GROUPE 1
GROUPE 2
0
1/16
f1
1/4
f2=4f1
1
fnor
fu/4
(3/4)fu
fu=16f1

FIG.8B